# EUROPEAN PATENT SPECIFICATION

(11) **EP 3 581 271 B1**
(45) Date of publication and mention of the grant of the patent: **15.04.2026**
(21) Application number: 18771651.9
(22) Date of filing: 15.02.2018
(51) Int. Cl.: B01D 53/94, B01J 23/63, B01J 35/00, B01J 35/30, B01J 35/56, F01N 3/035, F01N 3/28, F01N 3/10

(54) **EXHAUST GAS PURIFICATION CATALYST**
ABGASREINIGUNGSKATALYSATOR
CATALYSEUR DE PURIFICATION DE GAZ D'ÉCHAPPEMENT

(30) Priority: 23.03.2017 JP 2017057735
(43) Date of publication of application: 18.12.2019
(73) Proprietor: Cataler Corporation, Shizuoka 437-1492 (JP)
(72) Inventor: ONOE, Ryota, Kakegawa-shi Shizuoka 437-1492 (JP); NOMURA, Yasutaka, Kakegawa-shi Shizuoka 437-1492 (JP); INODA, Satoru, Kakegawa-shi Shizuoka 437-1492 (JP)
(74) Representative: Kramer Barske Schmidtchen Patentanwälte PartG mbB
(86) International application number: PCT/JP2018/005184
(87) International publication number: WO 2018/173557

(56) References cited:
- EP-A1- 2 042 225
- EP-A1- 2 322 773
- EP-A2- 1 657 410
- WO-A1-2016/024126
- WO-A1-2016/060048
- WO-A1-2016/060049
- WO-A1-2016/060049
- WO-A1-2016/094399
- WO-A1-2018/078559
- DE-A1- 102011 050 788
- FR-A1- 3 020 091
- JP-A- 2013 506 787

## Description

### Technical Field

The present invention relates to an exhaust system of an internal combustion engine comprising an exhaust passage and an exhaust gas purification catalyst. More particularly, the exhaust gas purification catalyst is of the wall flow type.

### Background Art

Generally, exhaust gas emitted by internal combustion engines contains particulate matter (PM) having carbon as a main component, as well as ash made up of unburned components, and that are known to give rise to air pollution. Regulations concerning emissions of particulate matter have therefore become stricter year after year, alongside regulations pertaining to harmful components in exhaust gas such as hydrocarbons (HC), carbon monoxide (CO) and nitrogen oxides (NOx). Various technologies for trapping and removing (purifying) particulate matter from exhaust gas have therefore been proposed.

For instance, particulate filters for trapping such particulate matter are provided in the exhaust passage of internal combustion engines. In gasoline engines, for example, a certain amount of particulate matter, though smaller than that in diesel engines, is emitted together with exhaust gas. A gasoline particulate filter (GPF), which is a particulate filter for gasoline engines, may accordingly be fitted in the exhaust passage. Such particulate filters include known filters having a structure, referred to as of wall flow type, in which a substrate is configured out of multiple cells made up of a porous body, and in which the inlets and the outlets of adjacent cells are plugged alternately. In a wall flow-type particulate filter, exhaust gas that flows in through cell inlets passes through a porous cell partition wall that partitions the cells, and is discharged out to the cell outlets. As the exhaust gas passes through the porous cell partition wall, the particulate matter becomes trapped within the pores inside the partition wall. Approaches involving supporting a noble metal catalyst on the above particulate filters have been studied in recent years with a view to further increasing exhaust gas purification performance. Examples of conventional technologies relating to particulate filters in which such catalysts are supported (hereafter referred to as exhaust gas purification catalysts) include for instance PTL 1 and PTL 2.
PTL 1 = JP 2007-185571 A
PTL 2 = JP 2009-82915 A

WO 2016/060049 A1 discloses an exhaust gas purification catalyst comprising a wall-flow filter and first and second catalyst layers. EP 2 042 225 A1 discloses an exhaust gas purification catalyst comprising a wall-flow filter and a first catalyst layer on the walls of first channels which is shorter than the filter length and a second catalyst layer inside the channel walls, wherein the catalyst layers may comprise Pd and Rh.

### Summary

### Technical Problem

Exhaust gas purification catalysts generally have a drawback in that the purification performance of the catalyst drops, on account of insufficient warm-up, in a case where the exhaust gas temperature is still low, for instance immediately following engine startup. Accordingly, exhaust gas purification catalysts are demanded that allow bringing out good purification performance in a shorter time, also in a low-temperature state, for instance immediately after engine startup. Regarding this feature, for instance PTL 1 proposes a configuration wherein platinum (Pt) and rhodium (Rh) as noble metal catalysts are supported separately inside a partition wall of a catalyst-supporting particulate filter. Further, PTL 1 indicates that the above configuration allows realizing an exhaust gas purification catalyst that exhibits high XOx purification activity under low-temperature conditions, and that boasts superior NOx purification performance. However, such technologies are still insufficient in terms of satisfying the levels of purification performance demanded in recent years, and have room for improvement.

It is a main object of the present invention, arrived at in the light of the above considerations, to provide an exhaust system of an internal combustion engine comprising an exhaust passage and an exhaust gas purification catalyst that has a particulate filter of wall flow structure type, and in which the purification performance of the catalyst can be further enhanced.

The object is achieved by an exhaust system of an internal combustion engine comprising an exhaust passage and exhaust gas purification catalyst according to claim 1. Such a configuration allows providing an exhaust gas purification catalyst in which purification performance (for instance a warm-up property) is better enhanced.

The length of the first catalyst layer in the extension direction is 15% to 40% of the total length L_{w}. Within such a range of length of the first catalyst layer there can be achieved both good purification performance (for instance a warm-up property) and reduction in pressure loss, at a high level.

The length of the second catalyst layer in the extension direction is 70% to 90% of the total length L_{w}. Within such a range of length of the second catalyst layer there can be achieved both good purification performance (for instance a warm-up property) and reduction in pressure loss, at yet higher level.

When the length the first catalyst layer is denoted as L₁ and the length of the second catalyst layer is denoted as L₂ in the extension direction, L_{w}, L₁ and, L₂ satisfy the following expression L_{w} < (L₁+L₂) < 2L_{w}, and part of the first catalyst layer and part of the second catalyst layer overlap in the extension direction. The effect of enhancing the above-described purification performance can be brought out more suitably through partial overlap of the first catalyst layer and the second catalyst layer in the extension direction.

In preferred implementations, the length over which the first catalyst layer and the second catalyst layer overlap in the extension direction is 5% to 30, preferably 10% to 20% of the total length L_{w}. The above-described effect of enhancing purification performance (for instance a warm-up property) can thus be brought out yet more suitably.

In one preferred implementation, when the thickness of the partition wall is denoted as T_{w}, a thickness T₁ of the first catalyst layer is 30% or less of the thickness T_{w}, in a thickness direction perpendicular to the extension direction. Within such a range of thickness T₁ of the first catalyst layer, the above-described effect of enhancing purification performance (for instance a warm-up property) can be brought out yet better.

In one preferred implementation, when the thickness of the partition wall is denoted as T_{w}, a thickness T₂ of the second catalyst layer is 50% to 100% of the thickness T_{w}, in a thickness direction perpendicular to the extension direction. Within such a range of thickness T₂ of the second catalyst layer, the above-described effect can be brought out yet better.

The first catalyst layer contains palladium (Pd) and the second catalyst layer contains rhodium (Rh). Purification of NOx in the second catalyst layer can progress readily as a result. Accordingly, the purification performance on exhaust gas can be further enhanced.

In one preferred implementation, the internal combustion engine is a gasoline engine. The temperature of exhaust gas in gasoline engines is comparatively high, and PM does not become deposited readily inside the partition wall. Accordingly, the above-described effect can be brought out more efficiently in a case where the internal combustion engine is a gasoline engine.

### Brief Description of Drawings

Fig. 1 is a diagram illustrating schematically an exhaust gas purification device according to an embodiment.
Fig. 2 is a perspective-view diagram illustrating schematically the configuration of an exhaust gas purification catalyst according to an embodiment.
Fig. 3 is a side-view diagram illustrating schematically the configuration of the exhaust gas purification catalyst of Fig. 2.
Fig. 4 is an enlarged cross-sectional diagram of a relevant portion, illustrating schematically the configuration in the vicinity of a partition wall of an exhaust gas purification catalyst according to an embodiment.
Fig. 5 is an enlarged cross-sectional diagram of a relevant portion of an exhaust gas purification catalyst according to another embodiment, illustrating schematically the configuration in the vicinity of a partition wall.
Fig. 6 is a graph comparing the temperature at which a 50% purification rate is reached in respective examples.
Fig. 7 is a graph comparing the time at which a 50% purification rate is reached in respective examples.
Fig. 8 is a graph comparing the temperature at which a 50% purification rate is reached in respective examples.
Fig. 9 is a graph comparing the time at which a 50% purification rate is reached in respective examples.
Fig. 10 is a graph comparing pressure loss increase rates in respective examples.
Fig. 11 is a graph comparing the temperature at which a 50% purification rate is reached in respective examples.
Fig. 12 is a graph comparing the time at which a 50% purification rate is reached in respective examples.

### Description of Embodiments

Preferred embodiments of the present invention will be explained below with reference to accompanying drawings. In the drawings below, members and portions that elicit identical effects are denoted with identical reference numerals, and a recurrent explanation thereof will be omitted or simplified. The dimensional relationships (length, width, thickness and so forth) in the figures do not necessarily reflect actual dimensional relationships. Any features other than the features specifically set forth in the present description and which may be necessary for carrying out the present invention (for instance general features pertaining to the arrangement of particulate filters in automobiles) can be regarded as instances of design matter for a person skilled in the art on the basis of known techniques in the technical field in question. The present invention can be realized on the basis of the disclosure of the present specification and common technical knowledge in the relevant technical field.

### <Exhaust gas purification device>

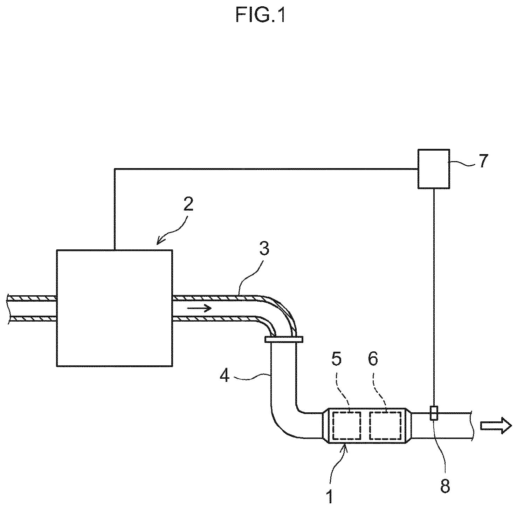

Firstly the configuration of an exhaust gas purification device according to an embodiment of the present invention will be explained with reference to Fig. 1. The exhaust gas purification device 1 disclosed herein is provided in an exhaust system of an internal combustion engine (engine) 2. Fig. 1 is a diagram illustrating schematically an internal combustion engine 2, and an exhaust gas purification device 1 provided in an exhaust system of the internal combustion engine 2.

An air-fuel mixture containing oxygen and fuel gas is supplied to the internal combustion engine 2 according to the present embodiment. In the internal combustion engine 2 the air-fuel mixture is burned and the combustion energy is converted to kinetic energy. The burned air-fuel mixture becomes exhaust gas that is discharged to the exhaust system. The internal combustion engine 2 having the structure illustrated in Fig. 1 is configured mainly as a gasoline engine of an automobile.

The exhaust system of the engine 2 will be explained next. An exhaust manifold 3 is connected to an exhaust port (not shown) through which the engine 2 communicates with the exhaust system. The exhaust manifold 3 is connected to an exhaust pipe 4 through which exhaust gas flows. An exhaust passage of the present embodiment is made up of the exhaust manifold 3 and the exhaust pipe 4. The arrows in the figure denote the flow direction of the exhaust gas. In the present specification the side closer to the engine 2 along the flow of the exhaust gas will be referred to as the upstream side, and the side further away from the engine 2 will be referred to as the downstream side.

The exhaust gas purification device 1 disclosed herein is provided in an exhaust system of the engine 2. The exhaust gas purification device 1 has for instance a catalyst unit 5, a filter unit 6 and an engine control unit (ECU) 7. The exhaust gas purification device 1 purifies harmful components, for instance, carbon monoxide (CO), hydrocarbons (HC) and nitrogen oxides (NOₓ) contained in the exhaust gas that is emitted, and traps particulate matter (hereafter referred to as "PM" for short) contained in the exhaust gas.

The ECU 7 performs control between the engine 2 and the exhaust gas purification device 1. The ECU 7 has, as a constituent element, an electronic device such as a digital computer, similarly to general control devices. Typically, the ECU 7 is provided with an input port electrically connected to sensors (for instance, a pressure sensor 8) that are disposed at respective locations in the engine 2 and/or the exhaust gas purification device 1. Thereby, information detected by the respective sensors is transmitted via the input port to the ECU 7 in the form of electrical signals. The ECU 7 is also provided with an output port. The ECU 7 is electrically connected, via the output port, to various sites of the engine 2 and of the exhaust gas purification device 1. The ECU 7 controls the operation of the various members through transmission of control signals.

The catalyst unit 5 is configured to be capable of purifying three-way components (NOx, HC and CO) contained in the exhaust gas. The catalyst unit 5 is provided in the exhaust pipe 4 that communicates with the engine 2. Specifically, the catalyst unit 5 is provided downstream of the exhaust pipe 4, as illustrated in Fig. 1. The configuration of the catalyst unit 5 is not particularly limited. The catalyst unit 5 may contain for instance a catalyst having supported thereon a catalyst metal such as platinum (Pt), palladium (Pd) or rhodium (Rd). A downstream catalyst unit may be further provided in the exhaust pipe 4 downstream of the filter unit 6. The specific configuration of the catalyst unit 5 is not a characterizing feature of the present invention, and will not be explained in detail herein.

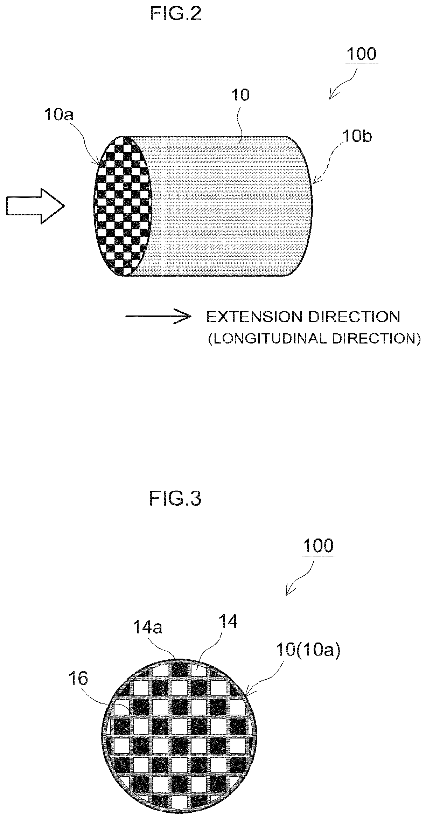

The filter unit 6 is provided downstream of the catalyst unit 5. The filter unit 6 is provided with a GPF capable of trapping and removing PM contained in the exhaust gas. The GPF is equipped with two below-described catalyst layers that contain a catalyst metal. The exhaust gas purification catalyst 100 disclosed herein (Fig. 2) is an example of the GPF. The exhaust gas purification catalyst 100 according to the present embodiment will be explained next in detail.

### <Exhaust gas purification catalyst>

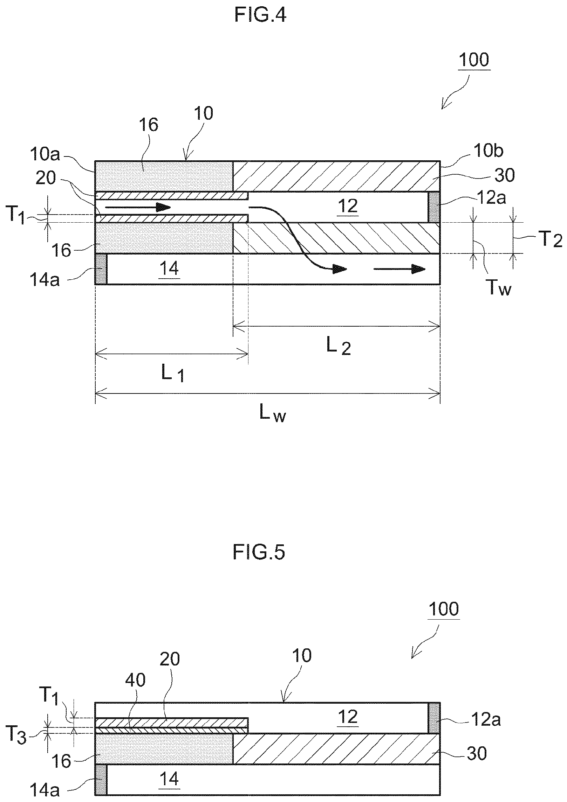

Fig. 2 is a perspective-view diagram illustrating the rough configuration of the exhaust gas purification catalyst 100 according to an embodiment. Fig. 3 is a side-view diagram of the exhaust gas purification catalyst 100 viewed from the side of the arrows in Fig. 2, i.e. viewed from the upstream side. Fig. 4 is an enlarged cross-sectional diagram illustrating schematically a relevant portion of the exhaust gas purification catalyst 100. The exhaust gas purification catalyst 100 disclosed herein has a substrate 10 of wall flow structure, and two catalyst layers (first catalyst layer 20 and second catalyst layer 30) that are provided in a partition wall 16 of the substrate 10. The white arrow in Fig. 2 denotes the orientation of introduction of exhaust gas into the exhaust gas purification catalyst 100. The black arrow in Fig. 2 denotes the longitudinal direction (also referred to as extension direction) of the substrate 10, and coincides with the introduction direction of the exhaust gas.

As illustrated in Fig. 2 to Fig. 4, the substrate 10 of wall flow structure has inlet cells 12 in which only an exhaust gas inflow end section 10a is open, outlet cells 14 adjacent to respective inlet cells 12 and in which only an exhaust gas outflow end section 10b is open, and a porous partition wall 16 that partitions the inlet cell 12 and the outlet cell 14 from each other. The inlet cells 12 and the outlet cells 14 are spaces formed by being delimited by the partition wall 16, and are formed elongately along the extension direction. The inlet cells 12 and outlet cells 14 configure part of flow channels of the exhaust gas in the exhaust gas purification catalyst 100. The term "cells" 12, 14 denote conceptually herein flow channels formed in the partition wall 16.

The exhaust gas purification catalyst 100 is characterized by being provided with a first catalyst layer 20 formed on the surface of the partition wall 16, on the side facing the inlet cells 12, and a second catalyst layer 30 formed in the interior of the partition wall 16, at least in a region facing the outlet cells 14. The first catalyst layer 20 is provided on the surface of the partition wall 16, on the side facing the inlet cells 12. The first catalyst layer 20 is formed in a length smaller than a total length L_{w} of the partition wall 16 from the exhaust gas inflow end section 10a, in the extension direction of the partition wall 16. The second catalyst layer 30 is provided inside the partition wall 16. The second catalyst layer 30 is provided along the extension direction of the partition wall 16 from the end section 10b, in a region that faces the outlet cells 14 and that includes at least the exhaust gas outflow end section 10b. Such a configuration allows bringing out a yet better purification performance (in particular a warm-up property) of the exhaust gas purification catalyst.

Conceivable reasons why such an effect is elicited include, although not particularly limited to, the following. Exhaust gas flows into the inlet cells 12 through the exhaust gas inflow end section 10a, passes through the partition wall 16 at any point, and thereafter often moves directly through the interior of the outlet cells 14 towards the end section 10b. In an exhaust gas purification catalyst where both the first catalyst layer 20 and the second catalyst layer 30 are disposed inside the partition wall 16, a large amount of exhaust gas intrudes into the partition wall 16 from the upstream side and comes into contact with the first catalyst layer 20, after which the exhaust gas passes, as it is, through the partition wall 16, and flows straight towards the end section 10b through the interior of the outlet cells 14. As a result, purification efficiency tends to drop in that the exhaust gas does not pass readily through the interior of the partition wall 16, and is therefore less likely to come into contact with the second catalyst layer 30. In an exhaust gas purification catalyst 100 in which the first catalyst layer 20 is disposed on the surface of the partition wall 16 and the second catalyst layer 30 is disposed in the interior of the partition wall 16, by contrast, the surface of the partition wall 16 on the upstream side is covered by the first catalyst layer 20, and as a result exhaust gas does not intrude readily into the partition wall 16 on the upstream side. A large amount of exhaust gas having flowed into the inlet cells 12 moves / diffuses as a result through the interior of the inlet cells 12 along the first catalyst layer 20, towards the end section 10b, after which the exhaust gas passes through the partition wall 16 on the downstream side, and comes more reliably into contact with the second catalyst layer 30. In such a configuration, thus, the exhaust gas passes through the first catalyst layer 20 and thereafter passes through the second catalyst layer 30, and hence the contact frequency between exhaust gas and the catalyst layers 20, 30 is higher than in conventional instances. This is deemed to contribute to enhancing purification performance, in particular the warm-up property.

### <Substrate 10>

As the substrate 10 there can be used conventional substrates of various materials and forms that are used in this kind of applications. For instance, substrates formed out of a ceramic such as cordierite or silicon carbide (SiC), or out of an alloy (for instance stainless steel), can be suitably used herein. The substrate 10 illustrated in Fig. 2 and Fig. 3 is a honeycomb substrate (honeycomb structure) in which a cylindrical frame portion that constitutes the external shape of the structure and a partition wall 16 that partitions, in the form of a honeycomb, the space inward of the frame portion, are integrated with each other. However, an elliptic cylinder shape or polygonal cylinder shape may be adopted, instead of a cylinder, as the outer shape of the substrate as a whole (in other words, as the shape of the frame portion). The capacity of the substrate 10 (the total volume of the cells) may be ordinary 0.1 L or greater, and preferably 0.5 L or greater, and may be for instance 5 L or smaller, preferably 3 L or smaller, and more preferably 2 L or smaller. The total length of the substrate 10 in the extension direction (in other words of the total length L_{w} of the partition wall 16 in the extension direction) is ordinarily 10 mm to 500 mm, and may be for instance about 50 mm to 300 mm. Such a substrate 10, as illustrated in Fig. 4, has the inlet cells 12 in which only the exhaust gas inflow end section is open, the outlet cells 14 adjacent to the inlet cells 12 and in which only the exhaust gas outflow end section is open, and the porous partition wall 16 that partitions the inlet cells 12 and the outlet cells 14 from each other.

### <Inlet cells and outlet cells>

The inlet cells 12 and the outlet cells 14 are formed through partitioning of the inner space of the frame portion of the substrate 10 by the partition wall 16. The inlet cells 12 and the outlet cells 14 are typically surrounded by the partition wall 16, except in the extension direction. The inlet cells 12 are flow channels on the exhaust gas inflow side, and the outlet cells 14 are flow channels on the exhaust gas outflow side. In the inlet cells 12 only the exhaust gas inflow end section is open, and in the outlet cells 14 only the exhaust gas outflow end section adjacent the inlet cells 12, is open. In the present embodiment, specifically, the inlet cells 12 are each provided with a sealing section 12a at the exhaust gas outflow end section. The exhaust gas outflow end section 10b of each inlet cell 12 is plugged by a sealing section 12a. The outlet cells 14 are each provided with a sealing section 14a at the exhaust gas inflow end section. The exhaust gas inflow end section 10a of each outlet cell 14 is plugged by a sealing section 14a. The inlet cells 12 and the outlet cells 14 may be set to have an appropriate shape and size taking into consideration the flow rate and components of the exhaust gas that is supplied to the exhaust gas purification catalyst 100. For instance, the cross-sectional shape of the inlet cells 12 and the outlet cells 14 in the extension direction thereof may adopt various geometrical shapes, for example a rectangular shape including squares, parallelograms, rectangles and trapezoids, and also triangular and other polygonal shapes (for instance, hexagons and octagons), as well as circular shapes. The cross-sectional shape of the cells in the present embodiment is square, and the inlet cells 12 and the outlet cells 14 are disposed according to a checkered pattern layout.

### <Partition wall 16>

The partition wall 16 is disposed between adjacent inlet cells 12 and outlet cells 14. The inlet cells 12 and the outlet cells 14 are partitioned from each other by the partition wall 16. In the present embodiment the partition wall 16 is formed as a honeycomb, and is provided extending in the extension direction so that the cells 12, 14 are formed elongately along the extension direction. The partition wall 16 is formed to have a cross-sectional grid shape that includes a plurality of wall portions disposed parallelly spaced from each other, and a plurality of other wall portion disposed parallelly spaced from each other, and being perpendicular to the former wall portions, in such a manner that the cross-sectional shape of the cells 12, 14 makes up the above squares. The partition wall 16 has a porous structure that allows exhaust gas to pass therethrough. The porosity of the partition wall 16 is not particularly limited, but is appropriately set to about 40% to 70% (for instance 50% to 70%), and is preferably 55% to 65%. When the porosity of the partition wall 16 is too low, pressure loss may become excessive, while when the porosity of the partition wall 16 is too high, the mechanical strength of the filter 100 tends to drop, all of which is undesirable. The average pore diameter of the partition wall 16 may be ordinarily about 1 µm to 60 µm, for instance 10 µm to 40 µm, from the viewpoint of enhancing PM trapping performance and curtailing pressure loss. The thickness T_{W} of the partition wall (herein the average thickness of the above wall portions) 16 is not particularly limited but may be about 50 µm to 2000 µm (for instance 100 µm to 800 µm). Such a range of the thickness of the partition wall is suitable in terms of catalyst design for increasing purification efficiency and contact efficiency between the catalyst and exhaust gas, while securing the strength of the substrate 10. An effect is moreover elicited where increases in pressure loss are suppressed, without detracting from PM trapping efficiency. The configuration of the frame portion is not particularly limited. For instance, the frame portion may be identical to the partition wall 16 as regards the thickness and porous properties of the frame portion.

### <First catalyst layer>

As illustrated in Fig. 4, the first catalyst layer 20 is formed on the surface of the partition wall 16, on the side facing the inlet cells 12. The first catalyst layer 20 is formed to a length smaller than the total length L_{w} of the partition wall 16 from the exhaust gas inflow end section 10a, in the extension direction of the partition wall 16. The first catalyst layer 20 typically has a dense porous structure the porosity of which is somewhat lower than that of the partition wall 16. In the art disclosed herein the surface on the upstream side of the partition wall 16 is covered by the first catalyst layer 20, as a result of which exhaust gas does not intrude readily into the partition wall 16 on the upstream side. Accordingly, a large amount of exhaust gas having flowed into the inlet cells 12 moves/diffuses along the first catalyst layer 20 through the interior of the inlet cells 12, towards the end section 10b. Thus the exhaust gas moving/diffusing along the first catalyst layer 20 through the interior of the inlet cells 12 can be purified efficiently by the first catalyst layer 20.

The length (average length; likewise hereafter) L₁ of the first catalyst layer 20 in the extension direction is not particularly limited, so long as it is smaller than the total length L_{w} of the partition wall 16 (i.e., L₁ < L_{w}). The length L₁ of the first catalyst layer 20 is 15% or more of L_{w} (i.e., L₁ ≥ 0.15L_{w}), more preferably 20% or more, and particularly preferably 25% or more, for instance from the viewpoint of enhancing purification performance. The length L₁ of the first catalyst layer 20 is 40% or less of the above L_{w} (i.e., L₁ ≤ 0.4L_{w}), from the viewpoint of reducing pressure loss. The art disclosed herein is realized in an implementation where the length L₁ of the first catalyst layer 20 with respect to the total length L_{w} of the partition wall 16 is 0.15L_{w} ≤ L₁ ≤ 0.4L_{w}.

The thickness (average thickness; likewise hereafter) T₁ of the first catalyst layer 20 is not particularly limited, but ordinarily is suitably about 5% or more of the thickness T_{w} of the partition wall 16 (i.e., T₁ ≥ 0.05T_{w}). The thickness T₁ of the first catalyst layer 20 is typically 8% or more of T_{w}, for instance 10% or more and preferably 15% or more. Within such a range of thickness T₁ of the first catalyst layer 20 it becomes possible to more suitably elicit the above-described effect of enhanced performance (for instance effect of enhancing the warm-up property), by suppressing intrusion of exhaust gas into the partition wall 16 on the upstream side (and thereby preventing exhaust gas from flowing through the first catalyst layer 20 alone). The upper limit of the thickness T₁ of the first catalyst layer 20 is not particularly limited, but may be preferably 50% or less of the above T_{w} (i.e., T₁ ≤ 0.5T_{w}), more preferably 30% or less, yet more preferably 25% or less, and particularly preferably 20% or less, for instance from the viewpoint of reducing pressure loss. For instance an exhaust gas purification catalyst wherein the thickness T₁ of the first catalyst layer 20 is 0.05T_{w} ≤ T₁ ≤ 0.4T_{w} is preferred from the viewpoint of combining, to a high degree, good purification performance and reduction in pressure loss.

The first catalyst layer 20 can contain a catalyst metal that functions as an oxidation and/or reduction catalyst, and a carrier that supports the catalyst metal. Examples of the catalyst metal include noble metals such as rhodium (Rh), palladium (Pd) and platinum (Pt) in the platinum group. Alternatively, a metal such as ruthenium (Ru), osmium (Os), iridium (Ir), silver (Ag) or gold (Au) may be used herein. These metals may be used in the form of alloys of two or more thereof. Various metal species such as alkali metals, alkaline-earth metals and transition metals may also be used. The catalyst metal is preferably used as microparticles having a particle size sufficiently small, from the viewpoint of increasing the contact area with exhaust gas. The average particle size (average value of particle size elucidated by transmission electron microscopy; likewise hereafter) of the catalyst metal particles is ordinary about 0.1 nm to 20 nm, and may be for instance 1 nm to 10 nm, or 7 nm or smaller, and further 5 nm or smaller.

In the present embodiment the first catalyst layer 20 contains Pd as a catalyst metal. Preferably, the content of Pd as a component of the first catalyst layer 20 is about 0.05 g to 5 g, for instance 0.1 g to 3 g, and typically 0.3 g to 2 g, per L of volume of the substrate. When the content of Pd is excessively low, the catalytic activity obtained from Pd may be insufficient, whereas when an excessively high carrying amount of Pd makes grain growth of Pd likelier to occur, while being also disadvantageous in terms of cost.

The first catalyst layer 20 is formed for instance by causing the catalyst metal to be supported on the carrier. The first catalyst layer 20 can be typically made up of a porous sintered compact of a carrier with catalyst, having a catalyst metal supported thereon. Examples of the carrier include metal oxides such as alumina (Al₂O₃), zirconia (ZrO₂), ceria (CeO₂), silica (SiO₂) and magnesia (MgO), titanium oxide (titania: TiO₂), or a solid solution of the foregoing (for instance a ceria-zirconia (CeO₂-ZrO₂) complex oxide). Alumina or a ceria-zirconia complex oxide is preferably formed among the foregoing. Two or more types of the above may be used concomitantly. Other materials (typically inorganic oxides) may be added, as auxiliary components, to the carrier. For instance rare earth elements such as lanthanum (La) or yttrium (Y), alkaline earth elements such as calcium, or other transition metal elements, may be used as the substance that can be added to the carrier. Among the foregoing, rare earth elements such as lanthanum and yttrium are preferably used as stabilizers, since these allow increasing specific surface area at high temperature, without hampering catalyst function.

The shape (outer shape) of the carrier is not particularly limited, but the carrier is preferably powdery, from the viewpoint of securing a yet greater specific surface area. For instance, the average particle size of a powder used as the carrier (average particle size measured by laser diffraction/scattering) is for instance 20 µm or smaller, typically 10 µm or smaller, and preferably for instance 7 µm or smaller. An excessively large average particle size of the carrier powder is undesirable, since in that case the dispersibility of the noble metal supported on the carrier tends to drop, and the purification performance of the catalyst to decrease. The average particle size may be for instance 5 µm or smaller, typically 3 µm or smaller. On the other hand, an excessively small average particle size of the carrier is undesirable, since in that case there decreases the heat resistance of a carrier itself made up of the above carrier, and the heat resistance characteristic of the catalyst decreases as a result. It is therefore preferable to use ordinarily a carrier having an average particle size of about 0.1 µm or greater, preferably for instance 0.5 µm or greater. The carrying amount of the catalyst metal in the carrier is not particularly limited, but is appropriately set to lie in the range of 0.01 mass% to 10 mass% (for instance 0.1 mass% to 8 mass%, typically 0.2 mass% to 5 mass%) with respect to the total mass of the carrier that supports the catalyst metal in the first catalyst layer 20. If the carrying amount of the catalyst metal is excessively small, the catalytic activity manifested by the catalyst metal may be insufficient, whereas an excessively large carrying amount of the catalyst metal makes grain growth likelier to occur in the catalyst metal, while being also disadvantageous in terms of cost.

The method for causing catalyst metal particles to be supported on the carrier is not particularly limited. For instance, a carrier that supports catalyst metal particles can be prepared by impregnating a carrier with an aqueous solution containing a catalyst metal salt (for example a nitrate) or a catalyst metal complex (for instance a tetraammine complex), followed by drying and firing.

In addition to the above-described carrier having catalyst metal particles supported thereon, also a co-catalyst having no catalyst metal particles supported thereon may be added to the first catalyst layer 20 disclosed herein. Examples of the co-catalyst include a powdery ceria-zirconia (CeO₂-ZrO₂) complex oxide, alumina (Al₂O₃) and silica (SiO₂). A ceria-zirconia complex oxide or alumina is particularly preferably used herein. Ordinarily, the content ratio of the co-catalyst with respect to 100 mass% as the total of the catalyst metal particles, the carrier and the co-catalyst, is appropriately 80 mass% or less (for instance 30 mass% to 80 mass%), and is preferably for instance 70 mass% or less (for instance 40 mass% to 60 mass%).

Barium may be added to the first catalyst layer 20 disclosed herein. Poisoning of the noble metal is suppressed, and catalytic activity enhanced, through addition of barium. Increased dispersibility in the catalyst metal entails better inhibition of sintering associated with grain growth in the catalyst metal at high temperature; the durability of the catalyst can be enhanced as a result. The addition amount of barium in the first catalyst layer 20 disclosed herein satisfies preferably a range of 0 mass% to 15 mass% with respect to the total mass of the first catalyst layer 20 excluding barium. The first catalyst layer 20 having barium added thereto can be produced for instance by preparing a barium aqueous solution in which a water-soluble barium salt (for instance, barium sulfate) is dissolved in water (typically deionized water), and adding then the resulting barium aqueous solution for instance to a carrier, followed by firing.

The coat density of the first catalyst layer 20 (i.e., the value resulting from dividing the mass of the first catalyst layer 20 by the volume (total bulk volume including also the volume of the cells) of the portion of length L₁ of the substrate) is not particularly limited, and is appropriately set to about 350 g/L or lower. The coat density of the first catalyst layer 20 is preferably 300 g/L or lower, more preferably 250 g/L or lower, and yet more preferably 200 g/L or lower, for instance from the viewpoint of reducing pressure loss. The coat density of the first catalyst layer 20 may be for instance 180 g/L or lower, and may be typically 160 g/L or lower. The lower limit of the coat density of the first catalyst layer 20 is not particularly limited, and is preferably 30 g/L or higher, more preferably 50 g/L or higher and yet more preferably 75 g/L or higher, for instance from the viewpoint of enhancing purification performance. For instance the coat density of the first catalyst layer 20 is 90 g/L or higher, and may be typically 100 g/L or higher.

### <Second catalyst layer>

The second catalyst layer 30 is formed in the interior of the partition wall 16. More specifically, the second catalyst layer 30 is formed on the surface (inner surface) of the pores, without plugging all the pores in the interior of the partition wall 16. The second catalyst layer 30 is formed in the interior of the partition wall 16 over a predetermined length along the extension direction, from the exhaust gas outflow end section 10b, in a region that includes at least a portion facing the outlet cells 14. As a result it becomes possible to achieve a yet higher exhaust gas purification performance. Specifically, a large amount of exhaust gas having flowed into the inlet cells 12 moves / diffuses through the interior of the inlet cells 12 along the first catalyst layer 20, towards the end section 10b, after which the exhaust gas flows through the interior of the partition wall 16 on the downstream side. Therefore, providing the second catalyst layer 30 inside the partition wall 16 on the downstream side allows purifying efficiently harmful components in the exhaust gas, while increasing the contact frequency between the exhaust gas and the catalyst metal.

In the present specification the wording "the catalyst layer is disposed in the interior of the partition wall" signifies that the catalyst layer is not present outside (typically on the surface) the partition wall, but is mainly present in the interior of the partition wall. More specifically, for instance the cross-section of the partition wall of the second catalyst layer 30 is observed under an electronic microscope, and the total coating amount in a range of length of 1/10 the length L_{w} (0.1L_{w}) of the substrate 10 from the exhaust gas outflow end section 10b towards the towards the downstream side is set to 100%. In this case the above wording signifies that the coating amount fraction that is present in the interior of the partition wall is typically 80% or higher, for instance 85% or higher, preferably 90% or higher, and further 95% or higher, being in particular substantially 100%. This is therefore clearly distinguished from an instance where, for example, part of the catalyst layer, when arranged on the surface of the partition wall, penetrates unintentionally into the partition wall.

The length (average length) L₂ of the second catalyst layer 30 in the extension direction is shorter than the total length L_{w} of the partition wall 16. The length L₂ of the second catalyst layer 30 is 70% or more of the total length L_{w} (i.e., L₂ ≥ 0.7L_{w}) from the viewpoint of enhancing purification performance. The length L₂ of the second catalyst layer 30 is 90% or less of the total length L_{w} (i.e., L₂ ≤ 0.9L_{w}), more preferably 85% or less, and particularly preferably 80% or less, of the total length L_{w}. The art disclosed herein can be preferably realized in an implementation where the length L₂ of the second catalyst layer 20 with respect to the total length L_{w} of the partition wall 16 is 0.7L_{w} ≤ L₂ ≤ 0.9L_{w}.

The thickness (average thickness) T₂ of the second catalyst layer 30 in the thickness direction perpendicular to the extension direction is not particularly limited, but is ordinarily 50% or more of the thickness T_{w} of the partition wall 16 (i.e., T₂ ≥ 0.5T_{w}), and may be typically 70% or more, for instance 80% or more and preferably 90% or more of the thickness T_{w}. In a preferred embodiment the second catalyst layer 30 is formed over the entirety of the partition wall 16 in the thickness direction (i.e., T_{w} is 100%; with T₂=T_{w}). Within the above range of thickness T₂ of the second catalyst layer 30, the above-described effect of enhancing performance (for instance effect of enhancing the warm-up property) can be brought about yet more suitably.

The total length L_{w} of the partition wall 16, the length L₁ of the first catalyst layer 20 and the length L₂ of the second catalyst layer 30 satisfy the expression L_{w} < (L₁+L₂) < 2L_{w}. In other words, parts of the first catalyst layer 20 and the second catalyst layer 30 in the extension direction overlap each other, as viewed in the thickness direction. Preferably, the first catalyst layer 20 and the second catalyst layer 30 partially come into contact with each other, in the extension direction, and are thus directly overlaid on each other. Through overlap of the first catalyst layer 20 and the second catalyst layer 30 in the extension direction it becomes thus possible to prevent that exhaust gas should pass through the portion along which the catalyst layer is not formed, and be discharged as-is without being purified. As a result exhaust gas components come into contact with the catalyst layer more reliably, which allows effectively enhancing purification efficiency.

The length over which the first catalyst layer 20 and the second catalyst layer 30 overlap in the extension direction is ordinarily 2% or more, typically 5% or more, and for instance 10% or more, of L_{w}, and is 30% or less, for instance 20% or less, of L_{w}. Among the foregoing ranges, L_{w} is preferably about 10% to 30%, from the viewpoint of achieving both low cost and high performance, at a high level.

The second catalyst layer 30 can contain a catalyst metal that functions as an oxidation and/or reduction catalyst, and a carrier that supports the catalyst metal. Examples of the catalyst metal include typically noble metals such as rhodium (Rh), palladium (Pd) and platinum (Pt) in the platinum group. Alternatively, a metal such as ruthenium (Ru), osmium (Os), iridium (Ir), silver (Ag) or gold (Au) may be used herein. These metals may be used in the form of alloys of two or more thereof. Various metal species such as alkali metals, alkaline earth metals and transition metals may also be used. The average particle size of the catalyst metal particles is ordinarily about 0.1 nm to 20 nm, and may be for instance 1 nm to 10 nm, or 7 nm or smaller, and further 5 nm or smaller.

In the present embodiment the second catalyst layer 30 contains Rh as a catalyst metal. Purification performance on exhaust gas can be better enhanced by arranging Rh in the second catalyst layer 30 and Pd in the first catalyst layer 20. Specifically, hydrocarbons (HC), carbon monoxide (CO) and oxygen (O₂) react preferentially with each other in the first catalyst layer 20 that contains Pd, on the upstream side; oxygen becomes readily depleted as a result in the second catalyst layer 30 on the downstream side. In consequence, reduction reactions (and accordingly NOx purification) progress readily in the second catalyst layer 30 containing Rh, and purification performance is better enhanced. Preferably, the content of Rh as a component of the second catalyst layer 30 is about 0.01 g to 2 g, for instance 0.05 g to 1.5 g, and typically 0.08 g to 1 g, per L of volume of the substrate. If the content of Rh is excessively low, the catalytic activity obtained from Rh may be insufficient, whereas an excessive carrying amount of Rh makes grain growth of Rh likelier to occur, while being also disadvantageous in terms of cost.

The second catalyst layer 30 is formed by causing the catalyst metal to be supported inside the pores of the partition wall 16. The second catalyst layer 30 can typically be configured through layering of the carrier with catalyst, having a catalyst metal supported thereon, throughout the interior of the partition wall 16. Examples of the carrier include metal oxides such as alumina (Al₂O₃), zirconia (ZrO₂), ceria (CeO₂), silica (SiO₂) and magnesia (MgO), titanium oxide (titania:TiO₂), or a solid solution of the foregoing (for instance a ceria-zirconia (CeO₂-ZrO₂) complex oxide). Alumina is preferred among these. Two or more types of the above may be used concomitantly. Other materials (typically inorganic oxides) may be added, as auxiliary components, to the carrier. For instance rare earth elements such as lanthanum (La) or yttrium (Y), alkaline earth elements such as calcium, or other transition metal elements, may be used as the substance that can be added to the carrier. Among the foregoing, rare earth elements such as lanthanum and yttrium are preferably used as stabilizers, since these allow increasing the specific surface area at high temperature, without hampering catalyst function.

The shape (outer shape) of the carrier is not particularly limited, but the carrier is preferably powdery, from the viewpoint of securing a yet greater specific surface area. Preferably, the average particle size of the powder used as the carrier is for instance 20 µm or smaller, typically 10 µm or smaller, and for instance 7 µm or smaller. An excessively large average particle size of the carrier powder is undesirable, since in that case the dispersibility of the noble metal supported on the carrier tends to drop, and the purification performance of the catalyst to decrease. The average particle size may be for instance 5 µm or smaller, typically 3 µm or smaller. On the other hand, an excessively small average particle size of the carrier is undesirable, since in that case there decreases the heat resistance of a carrier itself made up of the above carrier, and the heat resistance characteristic of the catalyst decreases as a result. Hence, it is preferable to use ordinarily a carrier having an average particle size of about 0.1 µm or greater, preferably for instance 0.5 µm or greater. The carrying amount of the catalyst metal in the carrier is not particularly limited, but is appropriately set to lie in the range of 0.01 mass% to 10 mass% (for instance 0.1 mass% to 8 mass%, typically 0.2 mass% to 5 mass%) with respect to the total mass of the carrier that supports the catalyst metal in the second catalyst layer 30. If the carrying amount of the catalyst metal is excessively small, the catalytic activity achieved by the catalyst metal may be insufficient, whereas an excessive carrying amount of the catalyst metal makes grain growth likelier to occur in the catalyst metal, while being also disadvantageous in terms of cost.

The method for causing catalyst metal particles to be supported on the carrier is not particularly limited. For instance, a carrier that supports catalyst metal particles can be prepared by impregnating a carrier with an aqueous solution containing a catalyst metal salt (for example a nitrate) or a catalyst metal complex (for instance a tetraammine complex), followed by drying and firing.

In addition to the above-described carrier having the catalyst metal particles supported thereon, also a co-catalyst having no catalyst metal particles supported thereon may be added to the second catalyst layer 30 disclosed herein. Examples of the co-catalyst include ceria-zirconia (CeO₂-ZrO₂) complex oxides, alumina (Al₂O₃) and silica (SiO₂). A ceria-zirconia complex oxide or alumina is particularly preferably used herein. Ordinarily, the content ratio of the co-catalyst with respect to 100 mass% as the total of the catalyst metal particles, the carrier and the co-catalyst, is appropriately 80 mass% or less (for instance 30 mass% to 80 mass%), and is preferably for instance 70 mass% or less (for instance 40 mass% to 60 mass%).

The coat density of the second catalyst layer 30 (i.e., the value resulting from dividing the mass of the second catalyst layer 30 by the volume (total bulk volume including also the volume of the cell) of the portion of length L₂ of the substrate) is not particularly limited, and is appropriately set to about 300 g/L or lower. The coat density of the second catalyst layer 30 is preferably 250 g/L or lower, more preferably 200 g/L or lower, and yet more preferably 180 g/L or lower, for instance from the viewpoint of reducing pressure loss. The coat density of the second catalyst layer 30 may be for instance 150 g/L or lower, and may be typically 120 g/L or lower. The lower limit of the coat density of the second catalyst layer 30 is not particularly limited, and is preferably 20 g/L or higher, more preferably 40 g/L or higher and yet more preferably 60 g/L or higher, for instance from the viewpoint of enhancing purification performance. For instance the coat density of the second catalyst layer 30 is 80 g/L or higher, and may be typically 90 g/L or higher. In a preferred embodiment, the coat density of the second catalyst layer 30 is lower than the coat density of the first catalyst layer 20. Through setting of the coat density of the second catalyst layer 30 to be thus lower than the coat density of the first catalyst layer 20, exhaust gas flows preferentially in the lower portion of the partition wall 16. The flow of exhaust gas from the inlet cells 12 to the outlet cells 14 becomes smooth as a result, and purification performance can be further enhanced and pressure loss be reduced.

The first catalyst layer 20 and the second catalyst layer 30 may be formed on the basis of different slurries. For instance there are prepared a slurry for first catalyst layer formation, for forming the first catalyst layer 20, and a slurry for second catalyst layer formation, for forming the second catalyst layer 30. The slurry for first catalyst layer formation contains various components (for instance, carrier powder supporting a catalyst metal such as Pd) that make up the first catalyst layer 20. The slurry for second catalyst layer formation contains various components (for instance, carrier powder supporting a catalyst metal such as Rh) that make up the second catalyst layer 30. In a preferred embodiment, the average particle size of the carrier powder contained in the slurry for first catalyst layer formation is larger than the average particle size of the carrier powder contained in the slurry for second catalyst layer formation. Arbitrary added components such as conventionally known binders, oxygen absorbing/releasing materials and additives, can be added to the slurry for first catalyst layer formation and to the slurry for second catalyst layer formation, in addition to the catalyst metal and carrier powder. A ceria-zirconia complex oxide, as a carrier or as a non-carrier, can be suitably used herein as the oxygen absorbing/releasing material. For instance alumina sol or silica sol can be used as the binder. The foregoing may be incorporated in the form of precursors that yield the above constituent components through firing.

The prepared slurry for first catalyst layer formation is supplied into the inlet cells 12 from the exhaust gas inflow end section 10a of the substrate 10, to be supplied to a portion of the surface of the partition wall 16 on the inlet cell 12 side at which the first catalyst layer 20 is formed. Specifically, for instance a honeycomb substrate 10 may be dipped into the slurry for first catalyst layer formation, from the exhaust gas inflow end section 10a side, such that after a predetermined lapse of time has elapsed, the honeycomb substrate 10 is taken out of the slurry. In this case an adjustment may be performed in that a pressure difference is caused to arise between the outlet cells 14 and the inlet cells 12 through pressing of the outlet cells 14 from the exhaust gas outflow end section 10b, to thereby prevent penetration of the slurry into the partition wall 16. Properties of the slurry for first catalyst layer formation, such as solids concentration and viscosity, may be adjusted as appropriate so that the slurry does not flow readily into the partition wall 16. A first catalyst layer 20 of desired properties can then be formed on the surface of the partition wall 16, on the side of the inlet cells 12, through drying and firing at a predetermined temperature for a predetermined time. The properties (for instance thickness and porosity) of the first catalyst layer 20 can be adjusted for instance depending on the properties of the slurry, the supply amount of the slurry, as well as on the drying and firing conditions.

The prepared slurry for second catalyst layer formation is supplied into the outlet cells 14 through the exhaust gas outflow end section 10b of the substrate 10, whereupon the second catalyst layer 30 becomes formed at a portion inside the pores of the partition wall 16. Specifically, for instance the honeycomb substrate 10 may be dipped in the slurry for second catalyst layer formation, from the exhaust gas outflow end section 10b, so that after a predetermined time has elapsed the substrate 10 is taken out of the slurry. Properties of the slurry for second catalyst layer formation, such as solids concentration and viscosity, may be adjusted as appropriate in such a manner that the slurry flows readily into the partition wall 16. A second catalyst layer 30 of desired properties can then be formed in the interior of the partition wall 16 through drying and firing at a predetermined temperature for a predetermined time. The properties (for instance thickness and porosity) of the second catalyst layer 30 can be adjusted for instance depending on the properties of the slurry, the supply amount of the slurry, as well as on the drying and firing conditions.

The honeycomb substrate 10 after application of the slurry is dried and fired at a predetermined temperature for a predetermined time. The drying conditions of the slurry vary depending on the shape and dimensions of the substrate or the carrier, but typically the slurry is dried at about 80°C to 300°C (for instance 100°C to 250°C) for about 1 to 10 hours, and is fired at about 400°C to 1000°C (for instance 500°C to 700°C) for about 1 to 4 hours. The exhaust gas purification catalyst 100 can be produced as a result.

In the exhaust gas purification catalyst 100 according to the present embodiment, exhaust gas flows into the inlet cells 12 from the exhaust gas inflow end section 10a of the substrate 10, as illustrated in Fig. 4. A large amount of exhaust gas having flowed into the inlet cells 12 moves / diffuses through the interior of the inlet cells 12 along the first catalyst layer 20, towards the end section 10b, after which the exhaust gas passes through the interior of the partition wall 16 on the downstream side, and reaches the outlet cells 14. The arrows in Fig. 4 denote the route of the exhaust gas that has flowed into the inlet cells 12, until reaching the outlet cells 14 by passing through the partition wall 16. The partition wall 16 has herein a porous structure. Therefore, the PM becomes trapped at the surface of the partition wall 16 and in the pores inside the partition wall 16 (typically, at the surface of the partition wall 16) as the exhaust gas passes through the partition wall 16. The first catalyst layer 20 is provided on the surface of the partition wall 16 on the upstream side and the second catalyst layer 30 is provided in the interior of the partition wall 16 on the downstream side. Therefore, harmful components in the exhaust gas can be purified as the exhaust gas passes over the surface and through the interior of the partition wall 16. Exhaust gas having passed through the partition wall 16 and reached the outlet cells 14 is then discharged out of the filter through the openings in the exhaust gas outflow side.

In the embodiment described above the first catalyst layer 20 is formed directly on the surface of the partition wall 16 (i.e., so that the first catalyst layer 20 and the partition wall 16 are in contact with each other). The manner in which the first catalyst layer 20 is formed is not limited. As illustrated in Fig. 5, for instance the first catalyst layer 20 may be formed via a base coat layer 40, containing no catalyst metal, on the surface of the partition wall 16 facing the inlet cells 12. In the examples of the figure the base coat layer 40 is formed on the surface of the partition wall 16, so as to encompass the entire region at which the first catalyst layer 20 is formed. The thickness T₃ of the base coat layer 40 is not particularly limited, but is for instance 20% or higher (i.e., T₃ ≥ 0.2×(T₁+T₃)), for instance 30% or higher, and typically 40% or higher, with respect to the total thickness (T₁+T₃) of the thickness T₃ of the base coat layer 40 and the thickness T₁ of the first catalyst layer 20. Preferably, the thickness T₃ is 80% or less of the above (T₁+T₃) (i.e., T₃ ≤ 0.8×(T₁+T₃)), for instance 70% or less, and typically 60% or less. The material that makes up the base coat layer 40 can be the same material as that of the first catalyst layer 20, but containing no catalyst metal. By virtue of the fact that the base coat layer 40 is provided between the first catalyst layer 20 and the partition wall 16, there is effectively suppressed intrusion of exhaust gas into the partition wall 16 on the upstream side (and accordingly exhaust gas flow passing through only the first catalyst layer 20), and there can be achieved a higher purification performance. As in the above-described embodiment, however, preferably the first catalyst layer 20 is directly formed on the surface of the partition wall 16, for instance from the viewpoint of lowering pressure loss.

Test examples according to the present invention will be explained next, but the invention is not meant to be limited to the test examples below.

### <Test example 1>

### (Example 1 not according to the invention)

In the present example an exhaust gas purification catalyst was produced in which the first catalyst layer was provided on the surface of the partition wall and the second catalyst layer was provided in the interior of the partition wall.

Specifically, there was prepared an alumina powder as a carrier for first catalyst layer formation, and the powder was impregnated with a solution of Rh nitrate as a noble metal catalyst solution, followed by evaporation to dryness, to thereby prepare an Rh/alumina carrier powder that supported 0.4 mass% of Rh. Then 75 parts by mass of the Rh/alumina carrier powder, 75 parts by mass of the ceria-zirconia complex oxide powder and deionized water were mixed to prepare a slurry A. Next, the slurry A was supplied into the inlet cells of a cordierite-made honeycomb substrate having a volume (denoting herein the entire bulk volume including also the volume of cell passages) of 1.2 L, from the exhaust gas inflow end section, to coat a formation portion of the first catalyst layer being a surface of the partition wall on the side of the inlet cells; the whole was then dried and fired, to form as a result a first catalyst layer on the surface of the partition wall. The length (coat width) L₁ of the first catalyst layer in the extension direction was set to 40% of the total length L_{w} of the partition wall, and the thickness T₁ was set to 20% of the total thickness T_{w} of the partition wall. The coat density of the first catalyst layer was set to 150 g/L.

There was further prepared an alumina powder as a carrier for second catalyst layer formation, and the powder was impregnated with a solution of Rh nitrate as a noble metal catalyst solution, followed by evaporation to dryness, to thereby prepare an Rh/alumina carrier powder that supported 0.4 mass% of Rh. Then 50 parts by mass of the Rh/alumina carrier powder, 50 parts by mass of the ceria-zirconia complex oxide powder and deionized water were mixed to prepare a slurry B. Next the slurry B was supplied into the outlet cells through the exhaust gas outflow end section of the substrate, to coat the inner surface of the pores at a region at which the partition wall faces the outlet cells; the whole was then dried and fired, to thereby form a second catalyst layer in the interior of the partition wall. The length (coat width) L₂ of the second catalyst layer in the extension direction was set to 70% of the total length L_{w} of the partition wall, and the thickness T₂ was set to 100% of the total thickness T_{w} of the partition wall. The coat density of the second catalyst layer was set to 100 g/L.

### (Comparative example 1)

In the present example the first catalyst layer was provided in the interior of the partition wall. Specifically, the slurry A was supplied into the inlet cells through the exhaust gas inflow end section of the substrate, to coat the inner surface of the pores at a region at which the partition wall faces the inlet cells; the whole was then dried and fired, to thereby form a first catalyst layer in the interior of the partition wall. The length of the first catalyst layer in the extension direction was set to 40% of the total length L_{w} of the partition wall, and the thickness was set to 100% of the total thickness T_{w} of the partition wall. The coat density of the first catalyst layer was set to 150 g/L. An exhaust gas purification catalyst was produced in accordance with the same procedure of Example 1, but herein the first catalyst layer was provided in the interior of the partition wall.

### (Endurance test)

An endurance test was carried out on the exhaust gas purification catalyst of each example. To conduct the endurance test, the exhaust gas purification catalyst of each example was disposed in a respective exhaust system of an engine having a displacement of 4.6 L, and the engine was run, to thereby supply exhaust gas into the inlet cell through the exhaust gas inflow side. The duration of the test was set to a lapse of time of 46 hours after the catalyst bed temperature reached 1000°C.

### (Evaluation of purification performance upon temperature rise)

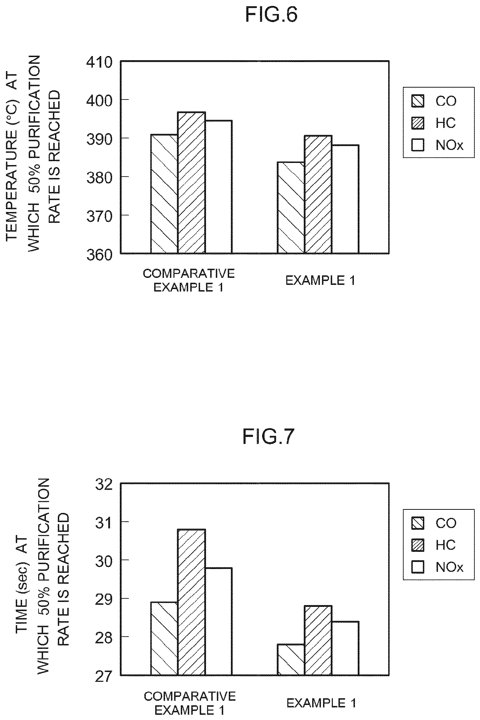

Once the endurance test was over, the exhaust gas purification catalyst of each example was set in the exhaust system of an engine bench, a simulated exhaust gas was caused to flow in while the inlet gas temperature of the catalyst was caused to rise from 150°C, using a heat exchanger, at a rate of temperature rise of 50°C/min, and the CO concentration, HC concentration and NOx concentration on the outlet side of the catalyst were measured. The temperature at which a respective gas concentration on the outlet side reached 50 mol% with respect to the concentration in the inflow gas (temperature at which a 50% purification rate is reached) was evaluated. The results are given in Table 1 and illustrated in Fig. 6. Fig. 6 is a graph comparing the temperature at which a 50% purification rate is reached in respective examples. The results show that a lower temperature at which a 50% purification rate is reached translates into better purification performance.

### (Evaluation of purification performance at the time of warm-up)

After the endurance test was over, the exhaust gas purification catalyst of each example was set in the exhaust system of an engine bench, the inlet gas temperature of the catalyst was caused to rise quickly from 50°C up to 500°C using a heat exchanger, a simulated exhaust gas was caused to flow in, and the CO concentration, HC concentration and NOx concentration on the outlet side of the catalyst were then measured. The time at which a respective gas concentration on the outlet side with respect to the concentration in the inflow gas reached 50 mol% (time at which a 50% purification rate is reached) was evaluated. The results are given in Table 1 and illustrated in Fig. 7. Fig. 7 is a graph comparing the time at which a 50% purification rate is reached in respective examples. The result shows that a shorter time at which a 50% purification rate is reached translates into better warm-up performance.

### [Table 1]

**Table 1**

| | First catalyst layer | | Second catalyst layer | | Temperature at which 50% purification rate is reached (°C) | | | Time at which 50% purification rate is reached (sec) | | |
|---|---|---|---|---|---|---|---|---|---|---|
| | Coat width L1 | Coating form | Coat width L2 | Coating form | | | | | | |
| | | | | | CO | HC | NOx | CO | HC | NOx |
| Example 1 | 40 | Surface | 70 | Interior | 383.8 | 390.6 | 388.2 | 27.8 | 28.8 | 28.4 |
| Comparative example1 | 40 | Interior | 70 | Interior | 390.9 | 396.7 | 394.5 | 28.9 | 30.8 | 29.8 |

As Table 1, Fig. 6 and Fig. 7 reveal, the catalyst of Example 1 in which the first catalyst layer was formed on the surface of the partition wall exhibited a lower temperature at which a 50% purification rate is reached, and a better purification performance, than those of in Comparative example 1, in which the first catalyst layer was formed in the interior of the partition wall. Further, the time at which a 50% purification rate is reached was shorter, and warm-up performance better, than those of in Comparative example 1. From the above it was found that arranging the first catalyst layer on the surface of the partition wall is effective in terms of enhancing purification performance (in particular a warm-up property).

### <Test example 2>

The test below was carried out in order to check the influence that the lengths (coat widths) L₁, L₂ of the first catalyst layer and the second catalyst layer exerts on purification performance.

In the present example an exhaust gas purification catalyst was produced in which first catalyst layer containing Pd was provided on the surface of the partition wall and a second catalyst layer containing Rh was provided in the interior of the partition wall.

Specifically, a ceria-zirconia complex oxide powder was prepared as a carrier for first catalyst layer formation, and the powder was impregnated with a solution of Pd nitrate as a noble metal catalyst solution, followed by evaporation to dryness, to thereby prepare a Pd/ ceria-zirconia complex oxide carrier powder on which Pd was supported. A slurry was prepared by mixing 60 parts by mass of this Pd/ ceria-zirconia complex oxide carrier powder, 50 parts by mass of alumina powder and deionized water. Next, the slurry was supplied into the inlet cells of a cordierite-made honeycomb substrate having a volume of 1.7 L, from the exhaust gas inflow end section, to coat a formation portion of the first catalyst layer being a surface of the partition wall on the side of the inlet cells; the whole was then dried and fired, to form as a result a first catalyst layer on the surface of the partition wall.

There was further prepared an alumina powder as a carrier for second catalyst layer formation, and the powder was impregnated with a solution of Rh nitrate as a noble metal catalyst solution, followed by evaporation to dryness, to thereby prepare an Rh/alumina carrier powder on which Rh was supported. Then 50 parts by mass of the Rh/alumina carrier powder, 50 parts by mass of the ceria-zirconia complex oxide powder and deionized water were mixed to prepare a slurry. Next the slurry was supplied into the outlet cells through the exhaust gas outflow end section of the substrate, to coat the inner surface of the pores at a region at which the partition wall faces the outlet cells; the whole was then dried and fired, to thereby form a second catalyst layer in the interior of the partition wall.

### (Examples 2 to 5, examples 2 and 5 not being according to the present invention)

In Examples 2 to 5 exhaust gas purification catalysts were produced by modifying the lengths (coat width) L₁, L₂ of the first catalyst layer and second catalyst layer in the extension direction, in the production process described above. The thickness T₁ of the first catalyst layer was fixed to 20% of the total thickness T_{w} of the partition wall. The coat density of the first catalyst layer was fixed to 110 g/L. The thickness T₂ of the second catalyst layer was fixed to 100% of the total thickness T_{w} of the partition wall. The coat density of the second catalyst layer was fixed to 100 g/L. The carrying amounts of Pd and Rh with respect to the carrier were adjusted so that the contents of the catalyst metal (Pd and Rh) per substrate were identical.

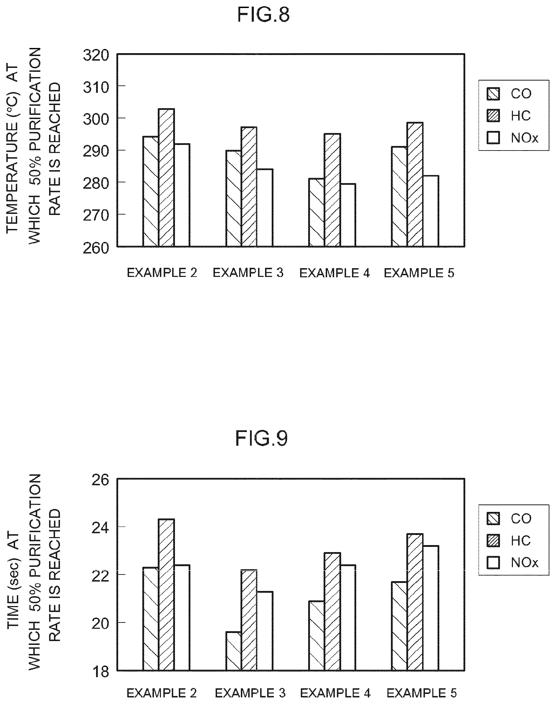

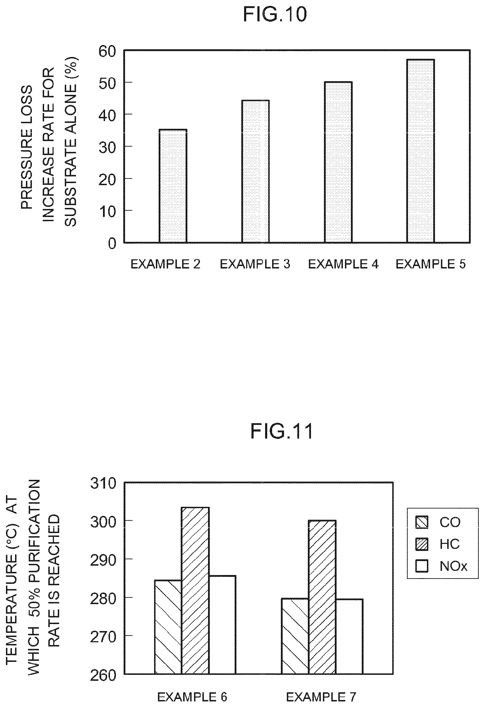

An endurance test and a purification performance evaluation test were carried out, in accordance with the above methods, on each obtained catalyst sample, and there were measured the temperature at which a 50% purification rate is reached and the time at which a 50% purification rate is reached after endurance. The exhaust gas purification catalyst of each example after the endurance test was set in a pressure loss measuring instrument of blower type, and pressure loss (kPa) was measured on the basis of a change in static pressure before and after the test. An identical pressure loss measurement test was performed on a filter substrate (reference example) having no catalyst layer formed thereon. A pressure loss increase rate in each sample was calculated in accordance with the following expression: Pressure loss increase rate (%) = [(pressure loss in respective sample - pressure loss in reference sample)]/pressure loss in reference example] ×100. The results are given in Table 2, and are illustrated in Fig. 8 to Fig. 10. Fig. 8 is a graph comparing the temperature at which a 50% purification rate is reached in respective examples. Fig. 9 is a graph comparing the time at which a 50% purification rate is reached in respective examples. Fig. 10 is a graph comparing pressure loss increase rates in respective examples.

### [Table 2]

**Table 2**

| Example | First catalyst layer | | Second catalyst layer | | Temperature at which 50% purification rate is reached (°C) | | | Time at which 50% purification rate is reached (sec) | | | Pressure loss increase rate (%) |
|---|---|---|---|---|---|---|---|---|---|---|---|
| | Coat width L1 | Coating form | Coat width L2 | Coating form | | | | | | | |
| | | | | | CO | HC | NOx | CO | HC | NOx | |
| 2 | 15 | Surface | 95 | Interior | 294.2 | 302.8 | 291.9 | 22.3 | 24.3 | 22.4 | 35.3 |
| 3 | 25 | Surface | 85 | Interior | 289.9 | 297.2 | 284.1 | 19.6 | 22.2 | 21.3 | 44.4 |
| 4 | 40 | Surface | 70 | Interior | 281.1 | 295.1 | 279.5 | 20.9 | 22.9 | 22.4 | 50 |
| 5 | 55 | Surface | 55 | Interior | 291 | 298.6 | 282 | 21.7 | 23.7 | 23.2 | 57.1 |

As Table 2 and Fig. 8 to Fig. 10 reveal, the longer the length (coat width) L₁ of the first catalyst layer in the extension direction, the better were the results of purification performance that were obtained. The length L₁ of the first catalyst layer in the extension direction is preferably 15% or more of the total length L_{w} of the partition wall, more preferably 25% or more, and yet more preferably 40% or more. On the other hand, pressure loss tended to decrease with a shorter length L₁ of the first catalyst layer in the extension direction. The length L₁ of the first catalyst layer in the extension direction is preferably 55% or less of the total length L_{w} of the partition wall, more preferably 40% or less, and yet more preferably 25% or less, from the viewpoint of reducing pressure loss. The length L₁ of the first catalyst layer in the extension direction is preferably 15% to 45%, and yet more preferably 20% to 40% of the total length L_{w} of the partition wall, from the viewpoint of achieving both good purification performance and reduction in pressure loss, at a high level.

### <Test example 3>

The test below was performed in order to check the influence that the base coat layer formed between the first catalyst layer and the partition wall exerted on purification performance.

### (Example 6)

In the present example there was produced an exhaust gas purification catalyst in which no base coat layer was provided between the first catalyst layer and the partition wall.

Specifically, a ceria-zirconia complex oxide powder was prepared as a carrier for first catalyst layer formation, and the powder was impregnated with a solution of Pd nitrate as a noble metal catalyst solution, followed by evaporation to dryness, to thereby prepare a Pd/ ceria-zirconia complex oxide carrier powder having 1.5 mass% of Pd supported thereon. A slurry C was prepared by mixing 60 parts by mass of this Pd/ ceria-zirconia complex oxide carrier powder, 50 parts by mass of alumina powder and deionized water. Next, the slurry C was supplied into the inlet cells of a cordierite-made honeycomb substrate having a volume of 1.2 L, from the exhaust gas inflow end section, to coat a formation portion of the first catalyst layer being a surface of the partition wall on the side of the inlet cells; the whole was then dried and fired, to form as a result a first catalyst layer on the surface of the partition wall. The length (coat width) L₁ of the first catalyst layer in the extension direction was set to 40% of the total length L_{w} of the partition wall, and the thickness T₁ was set to 20% of the total thickness T_{w} of the partition wall. The coat density of the first catalyst layer was set to 110 g/L.

There was further prepared an alumina powder as a carrier for second catalyst layer formation, and the powder was impregnated with a solution of Rh nitrate as a noble metal catalyst solution, followed by evaporation to dryness, to thereby prepare an Rh/alumina carrier powder that supported 0.2 mass% of Rh. Then 50 parts by mass of the Rh/alumina carrier powder, 50 parts by mass of the ceria-zirconia complex oxide powder and deionized water were mixed to prepare a slurry. Next the slurry was supplied into the outlet cells through the exhaust gas outflow end section of the substrate, to coat the inner surface of the pores at a region at which the partition wall faces the outlet cells; the whole was then dried and fired, to thereby form a second catalyst layer in the interior of the partition wall. The length (coat width) L₂ of the second catalyst layer in the extension direction was set to 70% of the total length L_{w} of the partition wall, and the thickness T₂ was set to 100% of the total thickness T_{w} of the partition wall. The coat density of the second catalyst layer was set to 100 g/L.

### (Example 7)

An exhaust gas purification catalyst was produced in the same way as in Example 6, but herein a base coat layer was provided between the first catalyst layer and the partition wall.

Specifically, a slurry having a composition identical to that of the slurry C was prepared but using herein a ceria-zirconia complex oxide powder having no catalyst metal supported thereon. This was supplied into the inlet cells of a cordierite-made honeycomb substrate having a volume of 1.2 L, from the exhaust gas inflow end section, to thereby coat a formation portion of the first catalyst layer being a surface of the partition wall on the side of the inlet cells; the whole was then dried and fired, to form as a result a base coat layer on the surface of the partition wall. The length (coat width) of the base coat layer in the extension direction was set to 40% of the total length L_{w} of the partition wall, and the thickness T₃ was set to 10% of the total thickness T_{w} of the partition wall. The coat density of the base coat layer was set to 55 g/L.

A slurry of composition identical to that of the slurry C was prepared but herein using a Pd/ceria-zirconia complex oxide carrier powder in which the carrying ratio of Pd had been adjusted to twice of the above slurry C. This slurry was supplied into the inlet cells through the exhaust gas inflow end section of the substrate, to coat the base coat layer, at the surface of the partition wall in contact with the inlet cells; the whole was then dried and fired, to form a first catalyst layer on the base coat layer. The length (coat width) L₁ of the first catalyst layer in the extension direction was set to 40% of the total length L_{w} of the partition wall, and the thickness T₂ was set to 10% of the total thickness T_{w} of the partition wall. The coat density of the first catalyst layer was set to 55 g/L.

An exhaust gas purification catalyst was produced in accordance with the same procedure as in Example 6, but herein a base coat layer was provided between the first catalyst layer and the partition wall.

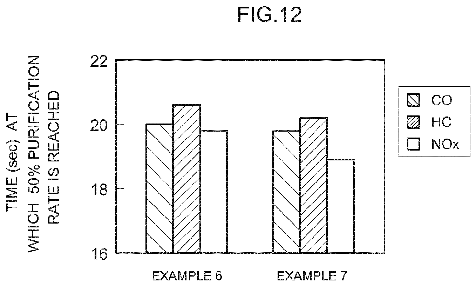

An endurance test and a purification performance evaluation test were carried out, in accordance with the above methods, on each obtained catalyst sample, and there were measured the temperature at which a 50% purification rate is reached and the time at which a 50% purification rate is reached after endurance. The results are given in Table 3 and are illustrated in Fig. 11 to Fig. 12. Fig. 11 is a graph comparing the temperature at which a 50% purification rate is reached in respective examples. Fig. 12 is a graph comparing the time at which a 50% purification rate is reached in respective examples.

### [Table 3]

**Table 3**

| Example | First catalyst layer | | Second catalyst layer | | Temperature at which 50% purification rate is reached (°C) | | | Time at which 50% purification rate is reached (sec) | | |
|---|---|---|---|---|---|---|---|---|---|---|
| | Coat width L1 | Coating form | Coat width L2 | Coating form | | | | | | |
| | | | | | CO | HC | NOx | CO | HC | NOx |
| 6 | 40 | Surface | 70 | Interior | 284.5 | 303.4 | 285.6 | 20 | 20.6 | 19.8 |
| 7 | 40 | Surface + base | 70 | Interior | 279.7 | 300 | 279.5 | 19.8 | 20.2 | 18.9 |

As Table 3, Fig. 11 and Fig. 12 reveal, the catalyst of Example 7, in which a base coat layer was provided between the first catalyst layer and the partition wall, afforded better results in terms of purification performance and warm-up performance than Example 6, in which no base coat layer was provided.

Several variations of the exhaust gas purification catalyst 100 have been illustrated above, but the structure of the exhaust gas purification catalyst 100 is not limited to those in any of the embodiments described above.

In the embodiments described above, for instance, both the first catalyst layer 20 and the second catalyst layer 30 have a single-layer structure, but the foregoing may each have a multilayer structure resulting from laying up a plurality (for instance 2 to 5) of layers. For instance the first catalyst layer 20 may be formed as a multilayer structure having an upper and a lower layer; the layer closer to the substrate (partition wall) being herein the lower layer and the layer distant from the substrate surface being the upper layer. The second catalyst layer 30 may be formed as a multilayer structure having an upper and a lower layer; the layer closer to the pore surface (partition wall) being herein the lower layer and the layer distant from the pore surface being the upper layer.

The shape and structure of the various members and portions of the exhaust gas purification device 1 may be modified. In the example illustrated in Fig. 1 the catalyst unit 5 is provided upstream of the filter unit, but the catalyst unit 5 may be omitted. The exhaust gas purification device 1 and the exhaust gas purification catalyst 100 are particularly suitable as a device and a catalyst for purification of harmful components in exhaust gas with comparatively high exhaust temperature, for instance in gasoline engines. However, the exhaust gas purification device 1 and exhaust gas purification catalyst 100 according to the present invention are not limited to being used to purify harmful components in exhaust gas of gasoline engines, and can be used in various applications that involve purifying harmful components in exhaust gas emitted by other kinds of engine (for instance, diesel engines).

### Reference Signs List

- 10: Base material
- 12: Inlet cell
- 14: Outlet cell
- 16: Partition wall
- 20: First catalyst layer
- 30: Second catalyst layer
- 40: Base coat layer
- 100: Exhaust gas purification catalyst

## Claims

1. An exhaust system of an internal combustion engine comprising an exhaust passage and an exhaust gas purification catalyst (100) disposed in the exhaust passage and adapted for purifying exhaust gas emitted by the internal combustion engine, the exhaust gas purification catalyst comprising:
a substrate (10) of wall flow structure having a porous partition wall (16) that partitions inlet cells (12) extending in an extension direction and in which only an exhaust gas inflow end section (10a) is open, and outlet cells (14) extending in the extension direction and in which only an exhaust gas outflow end section (10b) is open;
a first catalyst layer (20) formed on the surface of the partition wall (16), on the side of the inlet cells (12), in a length smaller than a total length L_{w} of the partition wall (16) along the extension direction from the exhaust gas inflow end section (10a); and
a second catalyst layer (30) formed in the interior of the partition wall (16), in at least part of a region facing the outlet cells (14), along the extension direction from the exhaust gas outflow end section (10b);
wherein the length of the first catalyst layer (20) in the extension direction is 15% to 40% of the total length L_{w},
wherein the length of the second catalyst layer (30) in the extension direction is 70% to 90% of the total length L_{w},
wherein when the length of the first catalyst layer (20) is denoted as L₁ and the length of the second catalyst layer (30) is denoted as L₂ in the extension direction, the L_{w}, the L₁, and the L₂ satisfy the following expression L_{w} < (L₁+L₂) < 2L_{w}; and part of the first catalyst layer (20) and part of the second catalyst layer (30) overlap in the extension direction, and
wherein the first catalyst layer (20) contains palladium (Pd) and the second catalyst layer (30) contains rhodium (Rh).

2. The exhaust system according to claim 1, wherein the length of the first catalyst layer (20) in the extension direction is 20% to 40% of the total length L_{w}.

3. The exhaust system according to claim 1 or 2, wherein the length over which the first catalyst layer (20) and the second catalyst layer (30) overlap in the extension direction is 5% to 30% of the total length L_{w}.

4. The exhaust system according to any one of claims 1 to 3, wherein the length over which the first catalyst layer (20) and the second catalyst layer (30) overlap in the extension direction is 10% to 20% of the total length L_{w}.

5. The exhaust system according to any one of claims 1 to 4, wherein when the thickness of the partition wall (16) is denoted as T_{w}, a thickness T₁ of the first catalyst layer (20) is 5% to 30% of the thickness T_{w}, in a thickness direction perpendicular to the extension direction.

6. The exhaust system according to any one of claims 1 to 5, wherein when the thickness of the partition wall (16) is denoted as T_{w}, a thickness T₂ of the second catalyst layer (30) is 50% to 100% of a thickness T_{w}, in a thickness direction perpendicular to the extension direction.

## Patentansprüche

1. Abgassystem einer Brennkraftmaschine, das einen Abgasdurchgang und einen Abgasreinigungskatalysator (100), der in dem Abgasdurchgang angeordnet ist und zum Reinigen von Abgas, das durch die Brennkraftmaschine ausgestoßen wird, angepasst ist, aufweist, welcher Abgasreinigungskatalysator aufweist:
ein Substrat (10) einer Wandströmungsstruktur, das eine poröse Trennwand (16) aufweist, die Einlasszellen (12), die sich in einer Erstreckungsrichtung erstrecken und bei denen nur ein Abgaseinströmungsendabschnitt (10a) offen ist, und Auslasszellen (14), die sich in der Erstreckungsrichtung erstrecken und bei denen nur ein Abgasausströmungsendabschnitt (10b) offen ist, trennt;
eine erste Katalysatorschicht (20), die auf der Oberfläche der Trennwand (16) auf der Seite der Einlasszellen (12) mit einer Länge, die kleiner als eine Gesamtlänge L_{W} der Trennwand (16) entlang der Erstreckungsrichtung von dem Abgaseinströmungsendabschnitt (10a) ausgebildet ist; und
eine zweite Katalysatorschicht (30), die in dem Inneren der Trennwand (16) in mindestens einem Teil einer Region, die die Auslasszellen (14) anblickt, entlang der Erstreckungsrichtung von dem Abgasausströmungsendabschnitt (10b) ausgebildet ist;
bei dem die Länge der ersten Katalysatorschicht (20) in der Erstreckungsrichtung 15% bis 40% der Gesamtlänge L_{W} ist,
bei dem die Länge der zweiten Katalysatorschicht (30) in der Erstreckungsrichtung 70% bis 90% der Gesamtlänge L_{W} ist,
bei dem, wenn die Länge der ersten Katalysatorschicht (20) als L₁ bezeichnet ist und die Länge der zweiten Katalysatorschicht (30) als L₂ bezeichnet ist, in der Erstreckungsrichtung, L_{W}, L₁ und L₂ den folgenden Ausdruck L_{W} < (L₁+L₂) < 2L_{W} erfüllen; und sich ein Teil der ersten Katalysatorschicht (20) und ein Teil der zweiten Katalysatorschicht (30) in der Erstreckungsrichtung überlappen, und
bei dem die erste Katalysatorschicht (20) Palladium (Pd) enthält und die zweite Katalysatorschicht (30) Rhodium (Rh) enthält.

2. Abgassystem nach Anspruch 1, bei dem die Länge der ersten Katalysatorschicht (20) in der Erstreckungsrichtung 20% bis 40% der Gesamtlänge L_{W} ist.

3. Abgassystem nach Anspruch 1 oder 2, bei dem die Länge, über die sich die erste Katalysatorschicht (20) und die zweite Katalysatorschicht (30) in der Erstreckungsrichtung überlappen, 5% bis 30% der Gesamtlänge L_{W} ist.

4. Abgassystem nach einem der Ansprüche 1 bis 3, bei dem die Länge, über die sich die erste Katalysatorschicht (20) und die zweite Katalysatorschicht (30) in der Erstreckungsrichtung überlappen, 10% bis 20% der Gesamtlänge L_{W} ist.

5. Abgassystem nach einem der Ansprüche 1 bis 4, bei dem, wenn die Dicke der Trennwand (16) als T_{W} bezeichnet ist, eine Dicke T₁ der ersten Katalysatorschicht (20) 5% bis 30% der Dicke T_{W} in einer Dickerichtung senkrecht zu der Erstreckungsrichtung ist.

6. Abgassystem nach einem der Ansprüche 1 bis 5, bei dem, wenn die Dicke der Trennwand (16) als T_{W} bezeichnet ist, eine Dicke T₂ der zweiten Katalysatorschicht (30) 50% bis 100% einer Dicke T_{W} in einer Dickerichtung senkrecht zu der Erstreckungsrichtung ist.

## Revendications

1. Système d'échappement d'un moteur à combustion interne comprenant un passage d'échappement et un catalyseur de purification de gaz d'échappement (100) disposé dans le passage d'échappement et adapté pour purifier le gaz d'échappement émis par le moteur à combustion interne, le catalyseur de purification de gaz d'échappement comprenant :
un substrat (10) de structure d'écoulement sur paroi ayant une paroi de séparation poreuse (16) qui sépare des cellules d'entrée (12) s'étendant dans une direction d'extension et dans lesquelles seule une section d'extrémité d'entrée de gaz d'échappement (10a) est ouverte, et des cellules de sortie (14) s'étendant dans la direction d'extension et dans lesquelles seule une section d'extrémité de sortie de gaz d'échappement (10b) est ouverte ;
une première couche de catalyseur (20) formée sur la surface de la paroi de séparation (16), du côté des cellules d'entrée (12), sur une longueur inférieure à la longueur totale L_{w} de la paroi de séparation (16) le long de la direction d'extension à partir de la section d'entrée de gaz d'échappement (10a) ; et
une deuxième couche de catalyseur (30) formée à l'intérieur de la paroi de séparation (16), dans au moins une partie d'une région faisant face aux cellules de sortie (14), le long de la direction d'extension à partir de la section d'extrémité d'écoulement de gaz d'échappement (10b) ;
dans lequel la longueur de la première couche de catalyseur (20) dans la direction d'extension est comprise entre 15 % et 40 % de la longueur totale L_{w},
dans lequel la longueur de la deuxième couche de catalyseur (30) dans la direction d'extension est comprise entre 70 % et 90 % de la longueur totale L_{w},
dans lequel, lorsque la longueur de la première couche de catalyseur (20) est désignée par L₁ et la longueur de la deuxième couche de catalyseur (30) est désignée par L₂ dans la direction d'extension, L_{w}, L₁ et L₂ satisfont à l'expression suivante L_{w} < (L₁ +L₂) < 2L_{w} ;
et une partie de la première couche de catalyseur (20) et une partie de la deuxième couche de catalyseur (30) se chevauchent dans la direction d'extension, et
dans lequel la première couche de catalyseur (20) contient du palladium (Pd) et la deuxième couche de catalyseur (30) contient du rhodium (Rh).

2. Système d'échappement selon la revendication 1, dans lequel la longueur de la première couche de catalyseur (20) dans la direction d'extension est comprise entre 20 % et 40 % de la longueur totale L_{w}.

3. Système d'échappement selon la revendication 1 ou 2, dans lequel la longueur sur laquelle la première couche de catalyseur (20) et la deuxième couche de catalyseur (30) se chevauchent dans la direction d'extension est comprise entre 5 % et 30 % de la longueur totale L_{w}.

4. Système d'échappement selon l'une quelconque des revendications 1 à 3, dans lequel la longueur sur laquelle la première couche de catalyseur (20) et la deuxième couche de catalyseur (30) se chevauchent dans la direction d'extension est comprise entre 10 % et 20 % de la longueur totale L_{w}.

5. Système d'échappement selon l'une quelconque des revendications 1 à 4, dans lequel, lorsque l'épaisseur de la paroi de séparation (16) est désignée par T_{w}, une épaisseur T₁ de la première couche de catalyseur (20) est comprise entre 5 % et 30 % de l'épaisseur T_{w}, dans une direction d'épaisseur perpendiculaire à la direction d'extension.

6. Système d'échappement selon l'une quelconque des revendications 1 à 5, dans lequel, lorsque l'épaisseur de la paroi de séparation (16) est désignée par T_{w}, l'épaisseur T₂ de la deuxième couche de catalyseur (30) est comprise entre 50 % et 100 % de l'épaisseur T_{w}, dans une direction d'épaisseur perpendiculaire à la direction d'extension.
